# NEUE EUROPÄISCHE PATENTSCHRIFT

(11) **EP 0 931 683 B2**
(45) Veröffentlichungstag und Bekanntmachung des Hinweises auf die Entscheidung über den Einspruch: **10.02.2010**
(45) Hinweis auf die Patenterteilung: 02.08.2006
(21) Anmeldenummer: 98120223.7
(22) Anmeldetag: 26.10.1998
(51) Int. Cl.: B60J 7/22

(54) **Schiebedachsystem mit Windabweiser eines Kraftfahrzeug**
Sliding roof opening device in a motor vehicle provided with a wind deflector
Dispositif de toît coulissant pour véhicule automobile avec déflecteur de vent

(30) Priorität: 22.01.1998 DE 19802301
(43) Veröffentlichungstag der Anmeldung: 28.07.1999
(73) Patentinhaber: ROBERT BOSCH GMBH, 70442 Stuttgart (DE)
(72) Erfinder: Lamm, Hubert, 77876 Kappelrodeck (DE); Stolz, Christian, 77815 Bühl (DE); Haderer, Günter, 77815 Bühl (DE)

(56) Entgegenhaltungen:
- EP-A- 0 903 253
- EP-A- 0 919 415
- DE-A- 19 549 200
- DE-U- 29 615 342
- JP-A- 63 097 420
- US-A- 5 031 959
- PATENT ABSTRACTS OF JAPAN vol. 010, no. 378 (M-546), 17. Dezember 1986 (1986-12-17) & JP 61 169319 A (MAZDA MOTOR CORP), 31. Juli 1986 (1986-07-31)

## Beschreibung

### Stand der Technik

Die Erfindung geht aus von einem Schiebedach-System mit Windabweiser für ein mit einem Schiebedach ausgestattetes Kraftfahrzeug nach der Gattung des Hauptanspruchs. Es ist schon ein Windabweiser bekannt (DE 39 13 567 A1), an dem Zusatz-Luftleitelemente angeordnet sind, die mittels zugeordneten Mitnehmern durch den Elektromotor des Schiebedeckels des Schiebedaches verstellbar sind. Der Windabweiser selbst schwenkt jedoch beim Öffnen des Schiebedeckels des Schiebedaches mittels Federkraft aus seiner Ruhestellung in der Schiebedachkassette in die Dachöffnung und wird beim Schließen des Schiebedeckels in die Schiebedachkassette zurückgeschwenkt, indem der Schiebedeckel auf die Schwenkarme des Windabweisers aufläuft und entgegen der Kraft der daran angreifenden Federn diese in die Schiebedachkassette zurückschwenkt. Das Auflaufen des Schiebedeckels auf die Schwenkarme des Windabweisers führt zu einem erheblichen Kraftanstieg, insbesondere bei starker Verschmutzung und schlechter Schmierung des Systems, für den Elektromotor des Schiebedaches, der außerdem noch bei Systemen mit Schließkraftbegrenzung kompensiert werden muß.

Mit der DE-A-195 49 200 ist ein Schiebedach-System mit Windleitelement für ein Fahrzeugdach mit einer verschließbaren Dachöffnung mit einem entlang der Vorderkante der Dachöffnung angeordneten Windleitblatt bekannt geworden. Dabei wird das Windleitblatt mittels eines Elektromotors derart verstellt, dass die anströmende Luft entweder nach oben oder nach unten geleitet wird.

Weiter hin zeigt die nicht vorveröffentlichte EP-A-903253 eine Schiebedachanordnung mit einem Windabweiser-Elektromotor und einem Schiebedeckel-Elektromotor.

Die Merkmale des Oberbegriffs sind durch die JP-A-63-097 420 bekannt.

### Vorteile der Erfindung

Das erfindungsgemäße Schiebedach-System mit den kennzeichnenden Merkmalen des Hauptanspruchs hat demgegenüber den Vorteil, dass der Windabweiser auf einfache Art und Weise sicher geöffnet und geschlossen werden kann, ohne dass es dabei zu einem unerwünschten Kraftanstieg an dem Elektromotor für den Schiebedeckel des Schiebedaches kommt.

Durch die in dem Unteranspruch aufgefiihrten Maßnahmen ist eine vorteilhafte Weiterbildung und Verbesserung des im Hauptanspruch angegebenen Windabweisers möglich.

Besonders vorteilhaft ist es, die Ansteuerung des Windabweiser-Elektromotors durch Signale vorzunehmen, die die Lage des Schiebedeckels kennzeichnen und von einer Steuerelektronik geliefert werden, die einen Schiebedeckel-Elektromotor zur Betätigung des Schiebedeckels ansteuert und die Lage des Schiebedeckels erfasst. Hierdurch ist immer eine genaue Zuordnung zwischen der Stellung des Schiebedeckels und der Stellung des Windabweisers gegeben.

### Zeichnung

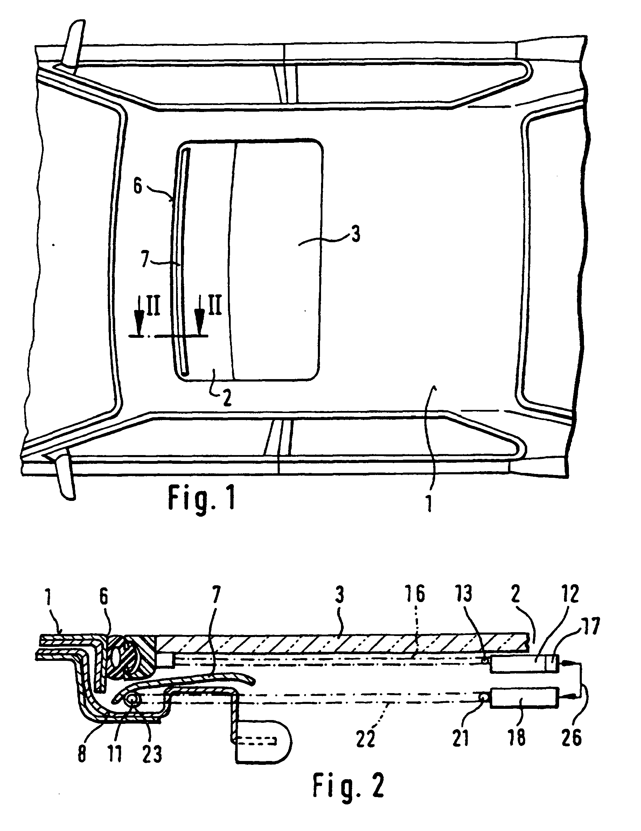

Ein Ausführungsbeispiel der Erfindung ist in der Zeichnung vereinfacht dargestellt und in der nachfolgenden Beschreibung näher erläutert. Es zeigen Figur 1 eine Draufsicht auf das Dach eines Kraftfahrzeuges, Figur 2 eine Teilansicht eines Schnittes durch ein Dach eines Kraftfahrzeuges mit einem Schiebedach entlang der Linie II-II in Figur 1.

### Beschreibung des Ausführungsbeispieles

In der Figur 1 ist eine Draufsicht auf ein Kraftfahrzeug gezeigt, dessen Dachfläche 1 eine Dachöffnung 2 aufweist, die mittels eines Schiebedeckels 3 eines Schiebedaches verschlossen oder zumindest teilweise geöffnet werden kann. Verstellmechanismen für den Schiebedeckel 3 des Schiebedaches sind allgemein bekannt und werden deshalb an dieser Stelle nicht näher erläutert. Beispielsweise bei einem sogenannten Schiebehebedach wird der Schiebedeckel 3 mit seiner entgegengesetzt der normalen Fahrtrichtung liegenden Hinterkante entweder über die feste Dachfläche 1 nach oben ausgestellt oder wie in der Figur 1 gezeigt nach Absenken der Hinterkante nach hinten unter die feste Dachfläche 1 geschoben. Bei einer derartigen Verschiebung des Schiebedeckels 3 in Richtung einer Öffnung der Dachöffnung 2 ist es bei Schiebedächern bekannt, an der in normaler Fahrtrichtung weisenden Vorderkante 6 der Dachöffnung 2 einen Windabweiser 7, der sich etwa über die gesamte Breite der Dachöffnung 2 erstreckt, durch die Dachöffnung 2 hindurch und über die feste Dachfläche 1 hinausragend zu schwenken.

Bei der Teildarstellung gemäß Figur 2 ist gezeigt, daß an der Dachfläche 1 eine sogenannte Schiebedachkassette 8 befestigt ist, die die Dachöffnung 2 im Bereich des Schiebedeckels 3, der beispielsweise aus Glas ausgebildet ist, sich in den Fahrgastraum hinein erstreckend umschließt. In der Nähe der Vorderkante 6 der Dachöffnung 2 ist in der Schiebedachkassette 8 um eine horizontale Achse 11 der Windabweiser 7 schwenkbar gelagert. In Figur 2 ist der Windabweiser 7 in seiner Ruhestellung dargestellt, die er einnimmt, solange der Schiebedeckel 3 die Dachöffnung 2 verschließt oder noch nicht ausreichend öffnet, um ein Schwenken des Windabweisers 7 in Richtung zur Vorderkante 6 hin zu ermöglichen. Die Betätigung des Schiebedeckels 3 erfolgt dabei in bekannter Weise mittels eines Schiebedeckel-Elektromotors 12, der beispielsweise über ein nicht näher dargestelltes Getriebe ein erstes Ritzel 13 verdreht, an dem ein mit dem Schiebedeckel 3 in Antriebsverbindung stehendes, strichpunktiert dargestelltes erstes Antriebskabel 16, das beispielsweise als ein Gewindekabel ausgebildet ist, in Antriebsverbindung steht. Der Schiebedeckel-Elektromotor 12 wird dabei durch eine Steuerelektronik 17 angesteuert, die in der Regel in den Schiebedeckel-Elektromotor 12 integriert ist. Ebenfalls an den Schiebedeckel-Elektromotor 12 ist eine die Lage des Schiebedeckels 3 erfassende Schalt- und Auswerteeinrichtung vorgesehen, die die Lage des Schiebedeckels 3 kennzeichnende elektrische Signale an die Steuerelektronik 17 liefert. Derartige Vorrichtungen zur Betätigung von Schiebedeckeln 3 sind beispielsweise bekannt durch die EP 0 469 286 B1 oder die EP 0 504 153 B1.

Erfindungsgemäß erfolgt die Betätigung des Windabweisers 7 durch einen separaten Windabweiser-Elektromotor 18, durch den ein zweites Ritzel 21 verdrehbar ist. Mit dem zweiten Ritzel 21 steht ein strichpunktiert dargestelltes zweites Antriebskabel 22, das als Gewindekabel ausgebildet ist, in Eingriff. Das zweite Antriebskabel 22 führt zu der Achse 11 des Windabweisers 7. Dort greift das zweite Antriebskabel 22 an einem dritten Ritzel 23 an, über das bei Betätigung des zweiten Antriebskabels 22 der Windabweiser 7 in seine betätigte Stellung in der Nähe der Vorderkante 6 der Dachöffnung 2 schwenkbar ist, oder von dort zurück in seine in Figur 2 dargestellte Ruhelage in der Schiebedachkassette 8. Die Ansteuerung des Windabweiser-Elektromotors 18 erfolgt dabei zweckmäßigerweise durch die Steuerelektronik 17 des Schiebedeckel-Elektromotors 12 in Abhängigkeit von Steuersignalen 26, die die Lage des Schiebedeckels 3 kennzeichnen. Wird also der Schiebedeckel 3 durch den Schiebedeckel-Elektromotor 12 derart angesteuert, daß er sich von der Vorderkante 6 der Dachöffnung 2 fortbewegend die Dachöffnung 2 ausreichend weit öffnet, so wird der Windabweiser-Elektromotor 18 durch die Steuersignale 26 angesteuert und bewegt über das zweite Antriebskabel 22 den Windabweiser 7 in Richtung zur Vorderkante 6 der Dachöffnung 2. Wird nun aus dieser Stellung heraus der Schiebedeckel 3 durch den Schiebedeckel-Elektromotor 12 in Richtung Schließen der Dachöffnung 2 bewegt, so wird ebenfalls in Abhängigkeit der Lage des Schiebedeckels 3 über die Steuersignale 26 der Windabweiser-Elektromotor 18 angesteuert, um den Windabweiser 7 in seine Ruhelage in der Schiebedachkassette 8 zurückzuschwenken, wenn der Schiebedeckel 3 einen vorbestimmten Abstand zur Vorderkante 6 der Öffnung 2 erreicht hat. Der Schiebedeckel-Elektromotor 12 braucht also nur noch für ein Drehmoment ausgelegt zu werden, das zur Betätigung des Schiebedeckels 3 ausreicht.

## Patentansprüche

1. Schiebedach-System eines Kraftfahrzeugs, das in seiner Dachfläche eine Dachöffnung (2) hat, wobei
- die Dachöffnung (2) durch einen Schiebedeckel (3) des Schiebedach-Systems öffenbar oder verschließbar ist und
- in der Dachöffnung (2) ein sich im wesentlichen über die gesamte Breite der Dachöffnung (2) erstreckender Windabweiser (7) des Schiebedach-Systems bewegbar ist,
- wobei der Windabweiser (7) mit einem Windabweiser-Elektromotor (18) in Antriebsverbindung steht und durch diesen bewegt wird,
wobei
- der Schiebedeckel (3) über ein erstes Antriebskabel (16) mit einem separaten Schiebedeckel-Elektromotor (12) in Antriebsverbindung steht, und
- der Windabweiser (7) über ein zweites Antriebskabel (22) mit dem Windabweiser-Elektromotor (18) in Antriebsverbindung steht, **dadurch gekennzeichnet, dass** das zweite Antriebskabel (22) als Gewindekabel ausgebildet ist, das in ein durch den Windabweiser-Elektromotor (18) drehbares Ritzel (21) und in ein weiteres Ritzel (23) an einer Achse (11) des schwenkbaren Windabweisers (7) eingreift.

2. Schiebedach-System nach Anspruch 1, **dadurch gekennzeichnet, dass** die Ansteuerung des Windabweiser-Elektromotors (18) durch Signale (26) erfolgt, die die Lage des Schiebedeckels (3) kennzeichnen und von einer Steuerelektronik (17) geliefert werden, die den Schiebedeckel-Elektromotor (12) zur Betätigung des Schiebedeckels (3) ansteuert und die Lage des Schiebedeckels (3) erfasst.

## Claims

1. Sliding roof system of a motor vehicle which has a roof opening (2) in its roof surface,
- the roof opening (2) being openable or closable by means of a sliding cover (3) of the sliding roof system, and
- a wind deflector (7) of the sliding roof system, which wind deflector extends essentially over the entire width of the roof opening (2), being movable in the roof opening (2),
- the wind deflector (7) being in driving connection with a wind deflector electric motor (18) and being moved by the latter,
- the sliding cover (3) being in driving connection with a separate sliding cover electric motor (12) via a first driving cable (16), and
- the wind deflector (7) being in driving connection with the wind deflector electric motor (18) via a second driving cable (22),
**characterized in that** the second driving cable (22) is designed as a threaded cable which engages in a pinion (21), which is rotatable by the wind deflector electric motor (18), and in a further pinion (23) on an axis (11) of the pivotable wind deflector (7).

2. Sliding roof system according to Claim 1, **characterized in that** the wind deflector electric motor (18) is activated by signals (26) which identify the position of the sliding cover (3) and are supplied by an electronic control system (17) which activates the sliding cover elecctric motor (12) in order to actuate the sliding cover (3) and detects the position of the sliding cover (3).

## Revendications

1. Système de toit coulissant pour un véhicule automobile, qui présente une ouverture de toit (2) dans la surface du toit,
- l'ouverture de toit (2) pouvant être ouverte ou fermée par un panneau coulissant (3) du système de toit coulissant et
- dans l'ouverture de toit (2), pouvant se déplacer un déflecteur de vent (7) du système de toit coulissant s'étendant essentiellement sur toute la largeur de l'ouverture de toit (2),
- le déflecteur de vent (7) étant en liaison d'entraînement avec un moteur électrique de déflecteur de vent (18) et étant déplacé par celui-ci,
- le panneau coulissant (3) étant en liaison d'entraînement par le biais d'un premier câble d'entraînement (16) avec un moteur électrique de panneau coulissant séparé (12), et
- le déflecteur de vent (7) étant en liaison d'entraînement par le biais d'un deuxième câble d'entraînement (22) avec le moteur électrique de déflecteur de vent (18), **caractérisé en ce que** le deuxième câble d'entraînement (22) est réalisé sous forme de câble fileté qui vient en prise dans un pignon (21) pouvant être tourné par le moteur électrique de déflecteur de vent (18) et vient en prise dans un autre pignon (23) sur un axe (11) du déflecteur de vent pivotant (7).

2. Système de toit coulissant selon la revendication 1, **caractérisé en ce que** la commande du moteur électrique de déflecteur de vent (18) a lieu par le biais de signaux (26) qui caractérisent la position du panneau coulissant (3) et qui sont fournis par une électronique de commande (17) qui commande le moteur électrique de panneau coulissant (12) pour actionner le panneau coulissant (3) et qui détecte la position du panneau coulissant (3).
